# EUROPÄISCHE PATENTANMELDUNG

(11) **EP 4 086 926 A1**
(43) Veröffentlichungstag der Anmeldung: **09.11.2022**
(21) Anmeldenummer: 21172014.9
(22) Anmeldetag: 04.05.2021
(51) Int. Cl.: H01F 7/02, H01F 41/02, H01F 41/16, H02K 15/02

(54) **VERFAHREN ZUR HERSTELLUNG EINES PERMANENTMAGNETEN, LÄUFER UND GERÄT**

(71) Anmelder: Siemens Aktiengesellschaft, 80333 München (DE)
(72) Erfinder: Rieger, Gotthard, 80636 München (DE); Schwaben, Markus, 97618 Hohenroth-Leutershausen (DE); Vollmer, Rolf, 36129 Gersfeld (DE)

(57) **Zusammenfassung**

Die Erfindung betrifft ein Verfahren zur Herstellung eines Permanentmagneten (1). Weiterhin betrifft die Erfindung einen Läufer (30) für einen Elektromotor (31) oder einen Elektrogenerator (32) aufweisend zumindest einen Permanentmagneten (1). Schließlich betrifft die Erfindung ein Gerät, insbesondere einen Elektromotor (31) oder einen Elektrogenerator (32), aufweisend zumindest einen Permanentmagneten (1) bzw. einen derartigen Läufer (30).

Um ein verbessertes Verfahren zur Herstellung eines Permanentmagneten (1), einen entsprechenden Läufer (30) und ein entsprechendes Gerät bereitzustellen, wird vorgeschlagen, dass das Verfahren folgende Verfahrensschritte umfasst:
- Bereitstellen einer Masse (2) aufweisend einen Binder (3) und ein Pulver (4) aufweisend Partikel (5) einer Magnetlegierung für Permanentmagnete,
- Ausformen der bereitgestellten Masse (2) zu einem Grünling (6) mittels Siebdruckes, mittels Schlickergusses oder mittels Folienziehens bzw. -gießens und
- Sintern des ausgeformten Grünlings (6).

## Beschreibung

Die Erfindung betrifft ein Verfahren zur Herstellung eines Permanentmagneten. Weiterhin betrifft die Erfindung einen Läufer für einen Elektromotor oder einen Elektrogenerator aufweisend zumindest einen Permanentmagneten. Schließlich betrifft die Erfindung ein Gerät, insbesondere einen Elektromotor oder einen Elektrogenerator, aufweisend zumindest einen Permanentmagneten bzw. einen derartigen Läufer.

Dauermagnete werden üblicherweise als Massivmaterial mit typischen metallischen oder keramischen Prozesstechniken wie Schmelzguss, Pulvermetallurgie, wie Sintern oder Heißpressen, und entsprechenden Nachbearbeitungsschritten hergestellt. Mit diesen Fertigungsverfahren und den eingeschränkten Möglichkeiten einer Orientierung, bspw. in Form einer Anisotropie, sind die für Elektromotoren nutzbaren geometrischen Formen, insbesondere die untere Grenze der Schichtdicke, eingeschränkt, da dort die Bruchgefahr zunimmt bzw. eine direkte Formgebung im Sinterprozess aufgrund der Pulverschüttung unmöglich ist.

In massivem metallischem Magnetmaterial liegen zudem hohe metallische Leitfähigkeit vor, die bei zunehmend höheren MotorDrehzahlen zu unerwünschten Wirbelstromverlusten im Erregermaterial führen.

Auch die Festigkeit ist Material-intrinsisch vorgebbar und oft nicht ausreichend hoch. Weiterhin ist die formschlüssige Verbindung zu weiteren Komponenten im Magnetkreis bzw. in der elektrischen Maschine, z.B. zu weich- und nichtferromagnetische Komponenten, auf Verbindungstechniken wie Kleben, Nieten oder Bandagieren festgelegt und kann nicht in einem integrierten Prozess erfolgen.

Gemäß einigen Ansätzen werden für Industriemotoren gesinterte oder heißgepresste Seltenerd-Permanentmagnete mit uniaxialer Vorzugsrichtung als Plättchen mit vergleichsweise großer Dicke durch pick-and-place Techniken auf dem Rotor montiert. Das Sintern erfolgt dabei bei hohen Temperaturen um 1000 °C. Für komplexere Geometrien und dünnere Magnete können kunststoffgebundene Magnete eingesetzt werden, die aber in ihrer Leistung und Einsatztemperatur stark begrenzt sind.

Die elektromagnetischen Eigenschaften der konventionellen metallischen oder keramischen Magnetmaterialien selbst, insbesondere das Koerzitivfeld und die Leitfähigkeit, lassen sich in Massivmaterial praktisch nur durch die Legierungsauswahl bzw. Zusatz geeigneter Additivelemente und durch die Mikrostruktur einstellen, die durch Prozessführung und thermische Behandlung entsteht. Hybride Magnete sind nur in den oben genannten Spezialfällen der Kunststoffbindung bekannt, z.B. bei Neodym-Eisen-Bor (NdFeB) und Samarium-Eisen-Stickstoff (SmFeN).

Permanentmagnete für spezielle Geometrien und Komponenten, z.B. Halbach-Arrays, oder als segmentierte Magnete werden durch Bearbeitungsschritte wie Fräsen, Schneiden und ggf. Kleben mit den oben genannten Einschränkungen erreicht.

Eine Aufgabe der Erfindung ist es, ein verbessertes Verfahren zur Herstellung eines Permanentmagneten, einen entsprechenden Läufer und ein entsprechendes Gerät bereitzustellen, welches bzw. welcher insbesondere die genannten Nachteile überwindet.

Eine Lösung der Aufgabe ergibt sich durch Verfahren der eingangs genannten Art dadurch, dass das Verfahren folgende Verfahrensschritte aufweist:
- Bereitstellen einer Masse aufweisend einen Binder und ein Pulver aufweisend Partikel einer Magnetlegierung für Permanentmagnete,
- Ausformen der bereitgestellten Masse zu einem Grünling mittels Siebdruckes, mittels Schlickergusses oder mittels Folienziehens bzw. -gießens und
- Sintern des ausgeformten Grünlings.

Weiterhin ergibt sich eine Lösung der Aufgabe durch einen Läufer der eingangs genannten Art dadurch, dass der Läufer zumindest einen Permanentmagneten aufweist, welcher mittels des vorgeschlagenen Verfahrens hergestellt ist.

Schließlich ergibt sich eine Lösung der Aufgabe durch ein Gerät der eingangs genannten Art dadurch, dass das Gerät zumindest einen Permanentmagneten aufweist, welcher mittels des vorgeschlagenen Verfahrens hergestellt ist, bzw. den vorgeschlagenen Läufer aufweist.

Zur Herstellung des Permanentmagnets wird zunächst eine Masse bereitgestellt, welche ein Pulver aufweist, wobei das Pulver Partikel einer Magnetlegierung für Permanentmagnete aufweist. Unter einem Permanentmagnet bzw. Dauermagnet wird dabei Stück hartmagnetischen Materials verstanden, zum Beispiel Legierungen aus Eisen, Cobalt, Nickel oder bestimmten Ferriten. Ein Permanentmagnet hat und behält ein gleichbleibendes Magnetfeld, ohne dass man wie bei Elektromagneten elektrische Leistung aufwenden muss. Insbesondere weisen Permanentmagnete ein Koerzitivfeld von größer als 10 kA/m auf. Bei Permanentmagneten handelt es sich bspw. um Selternerdmagnete, wie zum Beispiel Neodym-Eisen-Bor (NdFeB), Samarium-Cobalt (SmCo) sowie AlNiCo, d.h. Legierungen von Eisen mit Aluminium, Nickel und Cobalt sowie Kupfer. Permanentmagnete können bspw. auch Hartferrit-Sintermagnete sein. Entsprechend weist das Pulver Partikel eines Materials auf, aus welchem Permanentmagnete bzw. Dauermagnete hergestellt werden können.

Weiterhin weist die Masse einen Binder auf. Durch einen passend ausgewählten Binder können die Materialeigenschaften der Masse bzw. des Grünlings optimiert werden, z.B. kann die Fließfähigkeit der Masse an den nachfolgenden Ausform-Prozess angepasst werden oder kann die Festigkeit des anschließend ausgebildeten Grünlings eingestellt werden.

Die bereitgestellte Masse wird anschließend zu einem Grünling ausgeformt, wobei hierzu Siebdruck, Schlickerguss oder Folienziehen bzw. -gießen zum Einsatz kommt. Die genannten Verfahren ermöglichen, den Permanentmagneten in sehr dünnen Schichten aufzubauen. Zusätzlich können dabei die Materialeigenschaften des herzustellenden Permanentmagneten vorteilhaft beeinflusst werden.

Bei dem Siebdruck handelt es sich um ein Druckverfahren, bei dem die Druckfarbe, hier die Masse, bspw. mit einer Gummirakel durch ein feinmaschiges Gewebe hindurch auf das zu bedruckende Material gedruckt wird. An denjenigen Stellen des Gewebes, wo dem Druckbild entsprechend keine Farbe gedruckt werden soll, werden die Maschenöffnungen des Gewebes durch eine Schablone farbundurchlässig gemacht. Das zu bedruckende Material kann anschließend von dem gedruckten Grünling bzw. Permanentmagneten wieder entfernt werden.

Bei dem Schlickerguss handelt es sich um ein spezielles Gipsform-Gussverfahren zum Gießen von Grünkörpern, Rohlingen oder Gusskörpern, die zum Brand keramischer Erzeugnisse bzw. zum Sintern geeignet sind. Der Schlickerguss kommt beispielsweise auch in der traditionellen Porzellanherstellung zur Anwendung. Der Schlicker, ein Mineral-Wassergemisch bzw. ein Gemisch der Masse mit Wasser mit einer definierten Viskosität, wird in vorher sorgfältig getrocknete Gipsformen eingebracht. Der Gips entzieht dem Schlicker rasch Wasseranteile, wodurch sich die mineralischen Bestandteile bzw. die Masse an der Gipsform ablagern, verdichten und zunehmend verfestigen. Nach Erreichung eines bestimmten plastischen Festigkeits-Zustands werden die teilbaren Gipsformen entfernt.

Beispielsweise kann beim Foliengießen eine Keramiksuspension mit einem Feststoffgehalt von größer 50 % verwendet werden, wobei das Pulver mit den Partikeln der Magnetlegierung Teil des Feststoffes der Keramiksuspension ist. Hierzu kann bspw. ein Gießschlicker, welcher das Pulver aufweist, auf ein Trägerband aufgebracht werden und mittels einer Rakel in eine gewünschte Form gebracht werden. Das Trägerband mit dem darauf befindlichen Schlicker bzw. dem nunmehr ausgebildeten Grünling wird anschließend, bspw. mittels erwärmter Luft, getrocknet. Schließlich kann der Grünling von dem Trägerband entfernt werden, um den Grünling zu erhalten. Die Schwindung während des Sinterns beträgt dabei oftmals weniger als 20 %. Als Lösungsmittel kann bspw. Butanon und ein Dispergator eingesetzt werden, als Binder Methylcellulose. Das Sintern kann insbesondere unter einer Wasserstoff-Atmosphäre durchgeführt werden, wobei das Defektgleichgewicht und/oder Isolationseigenschaften beeinflussbar sind und bspw. definierte Sauerstoff-Partialdrücke durch den Wassergehalt der Sinteratmosphäre einstellbar sind.

Im Unterschied zum Foliengießen kann beim Folienziehen eine Folie mittels einer Walze durch ein Schlickerbad gezogen werden, wodurch sich eine Schlickerschicht bzw. der Grünling auf der Folie ausbildet.

Der ausgeformte Grünling wird dann gesintert, um den Permanentmagneten zu erhalten. Bei dem Sintern handelt es sich um Verfahren zur Herstellung oder Veränderung von Werkstoffen. Dabei werden feinkörnige keramische oder metallische Stoffe - oft unter erhöhtem Druck - erhitzt, wobei die Temperaturen jedoch unterhalb der Schmelztemperatur der Hauptkomponenten bleiben, so dass die Gestalt bzw. Form des Werkstückes erhalten bleibt.

Vor dem Sintern kann der Grünling entbindert und/oder getrocknet werden. Die Entbinderung hat zum Ziel, ein möglichst vollständiges Herauslösen des (organischen) Binders ohne Beeinflussung von der Bauteilgeometrie und der chemischen Reinheit des Werkstoffs zu bewirken. Es gibt dazu verschiedene Entbinderungsstrategien. Beispielsweise umfasst eine Entbinderung eine Lösungsmittelextraktion oder eine thermische Extraktion des Binders aus der Masse.

Bei der Flüssigphasenentbinderung wird das Bauteil in ein geeignetes Lösungsmittel eingelegt. Die Lösungsmittelentbinderung kann durch Einsatz von Hitze oder Druck unterstützt werden. Eine thermische Entbinderung wird z.B. durch Degradation, Evaporation oder eine durch die Kapillarkräfte eines eventuell verwendeten Pulverbetts unterstützte Flüssigextraktion des polymeren Binders vorgenommen. Oftmals werden verschiedene Entbinderungsmethoden miteinander kombiniert, um eine sukzessive Binderentfernung und damit ein schonendes Entbindern bei kurzen Prozesszeiten zu erreichen.

Nach dem Sintern kann der gesinterte Grünling bzw. Permanent-magnet durch eine Beaufschlagung mit einem entsprechenden Magnetfeld magnetisiert werden.

Bei einer vorteilhaften Ausgestaltung der Erfindung beträgt die Schichtdicke des hergestellten Permanentmagneten höchstens 3 mm, insbesondere höchstens 1,5 mm bzw. 1 mm.

Die vergleichsweise geringe Schichtdicke der hergestellten Permanentmagneten ermöglicht eine große Vielfalt an Permanentmagnet-Formen bzw. Ausgestaltungen, z.B. auch einen geschichteten Aufbau des jeweiligen Permanentmagneten.

Bspw. kann die Schichtdicke des mittels Siebdruckes hergestellten Permanentmagneten zwischen 0,05 mm und 1 mm, insbesondere zwischen 0,05 mm und 0,25 mm, betragen. Bei dem mittels Schlickergusses hergestellten Permanentmagneten kann die Schichtdicke zwischen 0,4 mm und 1 mm, insbesondere zwischen 0,5 mm und 0,75 mm, betragen. Beim Folienziehen bzw. -gießen kann die Schichtdicke des hergestellten Permanentmagneten zwischen 0,01 mm und 1 mm, insbesondere zwischen 0,05 mm und 0,5 mm, betragen.

Bei einer weiteren vorteilhaften Ausgestaltung der Erfindung umfasst das Verfahren weiterhin das Entfernen des Binders bzw. von Bestandteilen des Binders derart, dass der im Grünling enthaltene Kohlenstoff und/oder im Grünling enthaltene Wasserstoffe auf ein für den Permanentmagneten unschädliches Niveau gesenkt wird bzw. werden.

Sowohl der im Grünling enthaltene Kohlenstoff als auch im Grünling enthaltene Wasserstoffe können die Eigenschaften des anschließend durch Sintern hergestellten Permanentmagneten nachteilig beeinflussen. Bspw. bewirkt ein hoher Kohlenstoffgehalt im Permanentmagnet schlechtere Magneteigenschaften des Permanentmagneten. Ein hoher Wasserstoffgehalt im Grünling bzw. im Permanentmagnet wirkt aggressiv und kann das Bauteil somit beschädigen bzw. zerstören.

Um ein entsprechend unschädliches Niveau bezüglich des Kohlenstoffgehalts bzw. Gehalts an Wasserstoffen im Grünling zu erreichen, kann ein Entbinderungsverfahren angewandt werden, welches die Konzentrationen von Kohlenstoff bzw. von Wasserstoffen im Grünling ausreichend verringert. Alternativ oder zusätzlich kann ein Binder verwendet werden, der vergleichsweise wenig Kohlenstoff bzw. wenig Wasserstoffe enthält.

Bei einer weiteren vorteilhaften Ausgestaltung der Erfindung wird durch den Binder ein Kohlenstoff-Eintrag in den entbinderten Grünling von höchstens 150 ppm, insbesondere höchstens 100 ppm, bewirkt.

Betrachtet man den entbinderten Grünling, so soll jener Beitrag zum Gesamt-Kohlenstoffgehalt des Grünlings, welcher vom Binder herrührt, 150 ppm bzw. 100 ppm nicht übersteigen. Vorteilhafterweise wird daher ein Binder eingesetzt, welcher vergleichsweise wenig Kohlenstoff aufweist bzw. dessen Kohlenstoff vergleichsweise gut mittels eines Entbinderungsverfahrens aus dem Grünling zu entfernen ist. Der vergleichsweise geringe Kohlenstoffgehalt des damit erhaltenen Grünlings bzw. Permanentmagneten ermöglicht die Herstellung von besonders starken Permanentmagneten.

Bei einer weiteren vorteilhaften Ausgestaltung der Erfindung weist der Binder einen Duroplast auf und/oder umfassen die Partikel der Magnetlegierung kunststoffgebundene Partikel.

Dadurch, dass sich Duroplaste während des Sinterns bzw. bei hohen Temperaturen zersetzen, insb. pyrolysieren, kann ein vergleichsweise geringer Kohlenstoffgehalt in dem Grünling bzw. dem Permanentmagneten erzielt werden. Dies erlaubt die Herstellung von besonders starken Permanentmagneten. Auch die Kunststoffanteile der kunststoffgebundenen Partikel zersetzen sich, insb. pyrolysieren, während des Sinterns bzw. bei hohen Temperaturen, so dass auch damit ein vergleichsweise geringer Kohlenstoffgehalt in dem Grünling bzw. dem Permanentmagneten erzielt werden kann.

Bei einer weiteren vorteilhaften Bedeutung der Erfindung weist die Masse bei dem Siebdruck eine derartige Strukturviskosität auf, dass die Viskosität der Masse beim Hindurchdrücken durch das Siebdruckgewebe abnimmt und die Viskosität der Masse nach dem beim Hindurchdrücken durch das Siebdruckgewebe wieder zunimmt.

Die Strukturviskosität wird insbesondere durch die Bestandteile der Masse, d. h. insbesondere durch den Binder und das Pulver sowie ggf. weitere Zusätze, wie auch zugegebene Flüssigkeiten, bestimmt. Dabei weist die Masse eine geringere Viskosität auf, wenn sie durch das Siebdruckgewebe hindurchgedrückt wird. Durch die geringere Viskosität kann die Masse somit etwas leichter durch das Siebdruckgewebe gedrückt werden. Nach dem Hindurchdrücken durch das Siebdruckgewebe weist die Masse wieder eine höhere Viskosität auf, sodass sich die Masse bzw. der dann ausgeformte Grünling weniger leicht verformen und somit eher formstabil sind.

Dank der erläuterten Strukturviskosität lässt sich die Masse während des Ausformens des Grünlings besonders gut verarbeiten und gleichzeitig ist der damit erhaltenen Grünling vergleichsweise formstabil.

Insbesondere weist die Masse dabei eine vergleichsweise hohe Thixotropie auf, um ein "Auseinanderlaufen" des ausgeformten Grünlings zu vermeiden. Eine hohe Thixotropie geht insbesondere mit einer hohen Abhängigkeit der Viskosität von der Fließgeschwindigkeit der Masse einher. Beispielsweise beträgt die Viskosität η der Masse beim Siebdruck zwischen 1 Pa*s und 5000 Pa*s, bevorzugt zwischen 20 Pa*s und 1000 Pa*s. Eine derartige Viskosität kann bspw. mit wässrigen und Lösemittelbasierten Pasten bzw. Massen erzielt werden. Massen mit einer solchen Viskosität weisen eine vergleichsweise hohe Fließgeschwindigkeit auf und können beim Siebdruck bspw. mit einer Frequenz von ca. 100 Hz in der Standard-Messung verarbeitet werden. Bei geringer Fließgeschwindigkeit, bspw. bei einer Verarbeitung der Masse mit einer Frequenz von ca. 0,1 Hz, beträgt die Viskosität der Masse vorzugsweise mehr als 1000 Pa*s.

Bei einer weiteren vorteilhaften Ausgestaltung der Erfindung wird vor dem Sintern des Grünlings die Vorzugsrichtung der Partikel entlang einer vorgebbaren Richtung ausgerichtet.

Die Vorzugsrichtung eines Partikels ist dabei insbesondere jene Richtung bzw. Achse, entlang welcher ein magnetisiertes Partikel das stärkste Magnetfeld erzeugen kann. Die Ausrichtung erfolgt dabei vor dem Sintern, insbesondere bereits während des Ausformens, des Grünlings. Wird der gesinterte Grünling anschließend entlang der vorgebbaren Richtung magnetisiert, so kann ein besonders starker Permanentmagnet erzielt werden.

Bei der Ausrichtung der Vorzugsrichtung der Partikel kann bspw. eine intrinsische magnetische Anisotropie der Partikel ausgenutzt werden. Diese Anisotropie bedeutet, dass das jeweilige Partikel eine sogenannte leichte Richtung magnetische Vorzugsrichtung bzw. aufweist, entlang welcher das Partikel besonders gut magnetisierbar ist. Die leichte Richtung kann bspw. von einer Kristallanisotropie der Partikel herrühren. Entlang der leichten Richtung kann das magnetisierte Partikel besonders starke Magnetfelder erzeugen.

Zur Ausrichtung der Vorzugsrichtung der Partikel kann ebenfalls eine magnetische Formanisotropie ausgenutzt werden. Oftmals sind die Partikel des Pulvers der Magnetlegierung nicht kugelförmig und somit nicht kugelsymmetrisch, sodass die Partikel eine Vorzugsrichtung bzw. Längsrichtung aufweisen. Die Vorzugsrichtung kann man sich bspw. so veranschaulichen, dass das jeweilige Partikel entlang der Vorzugsrichtung bzw. Längsrichtung sein geringstes Trägheitsmoment aufweist. Entsprechend weist das jeweilige Partikel entlang anderer Achsen höhere Trägheitsmomente auf.

Dabei ist es nicht erforderlich, dass jedes einzelne Partikel vollständig entlang der vorgebbaren Richtung ausgerichtet wird. Oftmals werden bereits gute Ergebnisse erzielt, wenn viele bzw. die meisten der Partikel mit einer Abweichung von ±30° bzw. ±15° entlang der vorgebbaren Richtung ausgerichtet sind. Insbesondere ist unter der vorgebbaren Richtung eine Achse zu verstehen.

Bei einer weiteren vorteilhaften Ausgestaltung der Erfindung werden dabei die Partikel mit einem Magnetfeld derart beaufschlagt, dass sich die Partikel drehen und sich damit die Vorzugsrichtung der Partikel entlang der vorgebbaren Richtung ausrichtet.

Die Vorzugsrichtung eines Partikels ist dabei insbesondere jene Richtung bzw. Achse, entlang welcher ein magnetisiertes Partikel das stärkste Magnetfeld erzeugen kann. Die Ausrichtung erfolgt dabei vor dem Sintern, insbesondere bereits während des Ausformens, des Grünlings. Wird der gesinterte Grünling anschließend entlang der vorgebbaren Richtung magnetisiert, so kann ein besonders starker Permanentmagnet erzielt werden.

Bei der Ausrichtung der Vorzugsrichtung der Partikel kann bspw. eine intrinsische magnetische Anisotropie der Partikel ausgenutzt werden. Diese Anisotropie bedeutet, dass das jeweilige Partikel eine sogenannte leichte Richtung magnetische Vorzugsrichtung bzw. aufweist, entlang welcher das Partikel besonders gut magnetisierbar ist. Die leichte Richtung kann bspw. von einer Kristallanisotropie der Partikel herrühren. Entlang der leichten Richtung kann das magnetisierte Partikel besonders starke Magnetfelder erzeugen.

Zur Ausrichtung der Vorzugsrichtung der Partikel kann ebenfalls eine magnetische Formanisotropie ausgenutzt werden. Oftmals sind die Partikel des Pulvers der Magnetlegierung nicht kugelförmig und somit nicht kugelsymmetrisch, sodass die Partikel eine Vorzugsrichtung bzw. Längsrichtung aufweisen. Die Vorzugsrichtung kann man sich bspw. so veranschaulichen, dass das jeweilige Partikel entlang der Vorzugsrichtung bzw. Längsrichtung sein geringstes Trägheitsmoment aufweist. Entsprechend weist das jeweilige Partikel entlang anderer Achsen höhere Trägheitsmomente auf.

Zur Ausrichtung der Vorzugsrichtung der Partikel entlang der vorgebbaren Richtung werden die Partikel mit einem Magnetfeld beaufschlagt, sodass sich die Partikel drehen und entsprechend entlang des Magnetfeldes ausrichten. Dabei rührt die Drehung der Partikel bspw. von einer intrinsischen magnetischen Anisotropie oder von einer magnetischen Formanisotropie der Partikel. Vorzugsweise werden die Partikel während des Ausformens des Grünlings mit dem Magnetfeld beaufschlagt, insbesondere also während des Siebdruckes, Schlickergusses oder Folienziehens bzw. -gießens. Die Partikel können alternativ oder zusätzlich auch nach dem Siebdruck, Schlickerguss oder Folienziehen bzw. -gießen mit dem Magnetfeld beaufschlagt werden, wenn die Masse in dem Grünling noch eine flüssige bzw. zähflüssige Schicht bildet. Generell können die Partikel insbesondere mit dem Magnetfeld beaufschlagt werden, solange sie in der Masse noch beweglich genug sind, um sich zu drehen und ihre Vorzugsrichtung entlang der vorgebbaren Richtung auszurichten. Eine derartige Beweglichkeit der Partikel ist also insbesondere gegeben während des Ausformens des Grünlings bzw. solange die Masse in dem Grünling eine flüssige bzw. zähflüssige Schicht bildet.

Dabei ist es nicht erforderlich, dass jedes einzelne Partikel vollständig entlang der vorgebbaren Richtung ausgerichtet wird. Oftmals werden bereits gute Ergebnisse erzielt, wenn viele bzw. die meisten der Partikel mit einer Abweichung von ±30° bzw. ±15° entlang der vorgebbaren Richtung ausgerichtet sind. Insbesondere ist unter der vorgebbaren Richtung eine Achse zu verstehen.

Bei einer weiteren vorteilhaften Ausgestaltung der Erfindung wird dabei die Masse während des Ausformens des Grünlings derart mechanisch texturiert, dass sich die Vorzugsrichtung der Partikel entlang der vorgebbaren Richtung ausrichtet.

Unter Textur wird dabei insbesondere in der Kristallographie die Gesamtheit der Orientierungen der Kristallite eines vielkristallinen Festkörpers verstanden. Die Textur ist bspw. mit den Mikrostrukturausbildungen des Materials des herzustellenden Permanentmagneten verknüpft. Aus der Textur ergibt sich insbesondere die Anisotropie der mechanischen Verformbarkeit vieler metallischer Werkstoffe, bspw. die Zipfelbildung beim Tiefziehen von Blech, sowie die Anisotropie der magnetischen Eigenschaften von einigen weichmagnetischen (z. B. kornorientiertes Dynamoblech) und hartmagnetischen Werkstoffen (z. B. anisotrope Alnico-Magnete, Samarium-Cobalt-Legierungen, anisotrope Neodym-Eisen-Bor Legierungen, hartmagnetische Ferrite).

Eine besondere mechanische Texturierung und somit auch die Ausrichtung der Vorzugsrichtung der Partikel kann bspw. durch eine entsprechende Führungsrichtung des Rakels während des Siebdrucks, durch eine entsprechende Fließrichtung während des Schlickergusses oder durch eine entsprechende Zugrichtung während des Folienziehens bzw. -gießens erzielt werden. Vorzugsweise weisen die Partikel hierzu eine nicht-sphärische Symmetrie auf.

Dabei ist es nicht erforderlich, dass jedes einzelne Partikel vollständig entlang der vorgebbaren Richtung ausgerichtet wird. Oftmals werden bereits gute Ergebnisse erzielt, wenn viele bzw. die meisten der Partikel mit einer Abweichung von ±30° bzw. ±15° entlang der vorgebbaren Richtung ausgerichtet sind. Insbesondere ist unter der vorgebbaren Richtung eine Achse zu verstehen.

Bei einer weiteren vorteilhaften Ausgestaltung der Erfindung weist der Grünling zumindest zwei mittels Siebdruckes, mittels Schlickergusses oder mittels Folienziehens bzw. -gießens ausgeformte Lagen auf.

Der Grünling und somit auch der Permanentmagnet weist somit zwei oder mehr Lagen auf, die mittels Siebdruckes, mittels Schlickergusses oder mittels Folien-ziehens bzw. -gießens ausgeformt sind. Dabei kann die einzelne Lage insbesondere eine Schichtdicke aufweisen, wie sie oben erläutert wird. Denkbar ist bspw., dass die verschiedenen Lagen mit der gleichen Masse hergestellt werden. Die zwei oder mehr Lagen können insbesondere durch zwei separate Arbeitsschritte ausgeformt werden und anschließend zu dem einen Grünling zusammengesetzt werden. Alternativ können die zwei oder mehr Lagen in einem Arbeitsschritt derart ausgeformt werden, dass dabei der Grünling dabei entsteht.

Die zwei oder mehr Lagen können dabei die gleiche Schichtdicke oder unterschiedliche Schichtdicken aufweisen. Denkbar ist weiterhin, dass den Partikeln unterschiedlicher Schichten die gleiche vorgebbare Richtung oder unterschiedliche vorgebbare Richtungen vorgegeben wird bzw. werden. Bspw. können somit auch Halbach-Arrays hergestellt werden, die weiter unten noch etwas genauer erläutert werden.

Bspw. lassen sich durch eine Kombination von zwei oder mehr Schichten mit abweichenden Magneteigenschaften Zwischenwerte der Performance von Legierungsklassen (z.B. Hartferrite, NdFeB-Magnete) erreichen.

Diese Ausgestaltung der Erfindung ermöglicht die Herstellung von Permanentmagneten, die individuell bezüglich ihrer Form und/oder bezüglich ihrer magnetischen Eigenschaften ausgestattet sind.

Durch Mehrlagentechnik mit Isolationsschichten lassen sich Permanentmagnete weiterhin einfach segmentieren und Performanceverluste bei höheren Frequenzen vermeiden.

Bei einer weiteren vorteilhaften Ausgestaltung der Erfindung weisen dabei zumindest zwei der ausgeformten Lagen voneinander abweichende Material- bzw. Magneteigenschaften auf.

Insbesondere können für die zwei oder mehr Lagen unterschiedlicher Massen zum Einsatz kommen. Unterschiedliche Massen können bspw. unterschiedliche Binder und/oder unterschiedliche Partikel aufweisen, wobei für die unterschiedlichen Partikel unterschiedliche Materialien bzw. unterschiedliche Partikelgrößen und dergleichen verwendet werden können. Bspw. können Partikelmaterialien mit unterschiedlichen Magneteigenschaften zum Einsatz kommen.

Die zwei oder mehr Lagen können dabei die gleiche Schichtdicke oder unterschiedliche Schichtdicken aufweisen.

Beispielsweise lassen sich somit Halbach-Arrays herstellen, also eine spezielle Konfiguration von Permanentmagneten. Eine solche Konfiguration ermöglicht, dass sich der magnetische Fluss an der einen Seite der Konfiguration fast aufhebt, auf der anderen Seite jedoch verstärkt. Dazu werden Segmente von Permanentmagneten zusammengesetzt, deren Magnetisierungsrichtung gegeneinander jeweils um 90° in Richtung der Längsachse des Arrays gekippt ist, wie weiter unten noch etwas erläutert wird.

Denkbar ist auch, dass die gleiche Masse für die zwei oder mehr Lagen zum Einsatz kommt, jedoch unterschiedliche, weiter oben erläuterte Verfahren zur Ausrichtung der Vorzugsrichtung der Partikel zweier unterschiedliche Lagen zum Einsatz kommen.

Die zwei oder mehr Lagen können dabei die gleiche Schichtdicke oder unterschiedliche Schichtdicken aufweisen. Denkbar ist weiterhin, dass den Partikeln unterschiedlicher Schichten können die gleiche vorgebbare Richtung oder unterschiedliche vorgebbare Richtungen vorgebbar wird bzw. werden.

Bspw. lassen sich durch eine Kombination von zwei oder mehr Schichten mit abweichenden Magneteigenschaften Zwischenwerte der Performance von Legierungsklassen (z.B. Hartferrite, NdFeB-Magnete) erreichen.

Diese Ausgestaltung der Erfindung ermöglicht die Herstellung von Permanentmagneten, die besonders individuell bezüglich ihrer Form und/oder bezüglich ihrer magnetischen Eigenschaften ausgestattet sind.

Bei einer weiteren vorteilhaften Ausgestaltung der Erfindung umfasst das Verfahren weiterhin:
- Einbringen zumindest einer elektrisch isolierenden Schicht bzw. einer elektrisch isolierenden Dotierung in den Grünling.

Durch das Einbringen einer elektrisch isolierenden Schicht bzw. einer elektrisch isolierenden Dotierung in den Grünling können die Magneteigenschaften des herzustellenden Permanentmagneten verbessert werden. Insbesondere lassen sich dadurch Wirbelströme und damit einhergehende Verluste verringern.

Dies ist insbesondere bei höheren Drehzahlen eines Läufers für einen Elektromotor oder einen Elektrogenerator von Vorteil, um die unerwünschten Wirbelstromverlusten zu verringern bzw. zu vermeiden.

Vorzugsweise wird eine derartige elektrische isolierende Schicht bzw. eine derartige elektrisch isolierende Dotierung zwischen zwei Schichten angeordnet, die mit der oben erläuterten Masse ausgebildet wurden. Die genannte Dotierung kann insbesondere auch innerhalb einer Schicht angeordnet sein, die mit der oben erläuterten Masse ausgebildet wurde.

Bspw. kann die elektrische isolierende Schicht bzw. die elektrisch isolierende Dotierung nach der Trocknung des Grünlings eingebracht werden, wobei bspw. anorganische elektrische Isolatoren verwendet werden können. Das Einbringen einer elektrisch isolierenden Schicht bzw. einer elektrisch isolierenden Dotierung trägt dazu bei, einen temperaturstabilen Schichtaufbau bzw. Permanentmagneten zu erhalten.

Bei einer weiteren vorteilhaften Ausgestaltung der Erfindung wird der Permanentmagnet als freistehende Struktur bzw. nicht substratbehaftet hergestellt.

Während in einigen Beispielen der herzustellende Permanent-magnet auf einer Trägerstruktur bzw. einem Substrat hergestellt wird, wird der Permanentmagnet gemäß dieser Ausgestaltung insbesondere ohne die Verwendung eines Substrates hergestellt.

Vorzugsweise weist der hergestellte Permanentmagnet bei Raumtemperatur ein Koerzitivfeld von mindestens 900 kA/m, insbesondere von mindestens 1000 kA/m, eine Remananz von mindestens 0,9 T, insbesondere mindestens 1,1 T, und/oder eine spezifische Dichte von 7,4 bis 7,6 g/cm³ auf.

Durch die Beeinflussungsmöglichkeit der Schichtoberfläche bzw. Mikrostruktur während des Zwischenschritts, bspw. während des Ausformens bzw. Vorliegens des Grünlings, ist vorteilhafterweise eine gezielte Erhöhung der Festigkeit und des elektrischen Widerstands möglich. Diese Beeinflussung erfolgt insbesondere anhand der oben erläuterten Verfahren, insb. zur Ausrichtung der Vorzugsrichtung der Partikel entlang der vorgebbaren Richtung. Insbesondere erfolgt die Einstellung des hartmagnetischen Gefüges erst mit dem Schritt der Entbinderung, d.h. dem Austreiben des Binders vor dem Sintern, und der Sinterung.

Gegenüber Kunststoff-gebundenen Magneten hat der mittels des vorgeschlagenen Verfahrens hergestellte Permanentmagnet bspw. den Vorteil einer höheren Energiedichte. Bspw. weist der vorgeschlagene Permanentmagnet eine zweifach höhere spezifische Dichte und dadurch ca. eine vierfach höhere Energiedichte als konventionelle Permanentmagnete auf. Vorteilhafterweise weist der vorgeschlagene Permanentmagnet zusätzlich eine höhere Temperaturstabilität bspw. als Permanentmagnete mit kunststoffgebundenen Schichten auf. Ferner weist der vorgeschlagene Permanentmagnet eine höhere Feuchtigkeits-Stabilität auf und ist besonders kostengünstig herstellbar.

Im Folgenden wird die Erfindung anhand der in den Figuren dargestellten Ausführungsbeispiele näher beschrieben und erläutert. Es zeigen:
- FIG 1-5: ein erstes bis fünftes Ausführungsbeispiel des vorgeschlagenen Verfahrens,
- FIG 6: zeigt einen beispielhaften Verfahrensschritt zur Ausrichtung einer Vorzugsrichtung der Partikel entlang einer vorgebbaren Richtung,
- FIG 7-9: ein erstes bis drittes Ausführungsbeispiel eines mittels des vorgeschlagenen Verfahrens hergestellten Permanentmagneten, und
- FIG 10: ein Ausführungsbeispiel des vorgeschlagenen Läufers und des vorgeschlagenen Geräts.

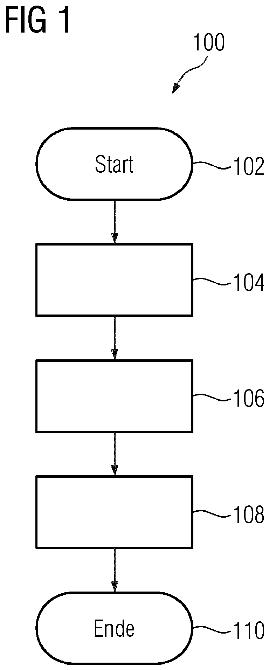

Die Figur 1 zeigt ein erstes Ausführungsbeispiel des vorgeschlagenen Verfahrens, wobei ein schematisches Ablaufdiagramm dargestellt ist.

Das Verfahren beginnt mit dem Schritt 102. Bei dem Schritt 104 wird eine Masse bereitgestellt aufweisend einen Binder und ein Pulver, welches Partikel einer Magnetlegierung für Permanentmagnete aufweist. Bei dem Schritt 106 wird die bereitgestellten Masse zu einem Grünling mittels Siebdruckes, mittels Schlickergusses oder mittels Folienziehens bzw. - gießens ausgeformt. Bei dem Schritt 108 wird der ausgeformte Grünling gesintert. Und mit dem Schritt 110 kann das Verfahren enden.

Das Verfahren kann dabei weitere Verfahrensschritte umfassen, die weiter oben bzw. unten erläutert werden. Insbesondere kann der gesinterte Grünling bzw. Permanentmagnet nach dem Sintern durch eine Beaufschlagung mit einem entsprechenden Magnetfeld magnetisiert werden.

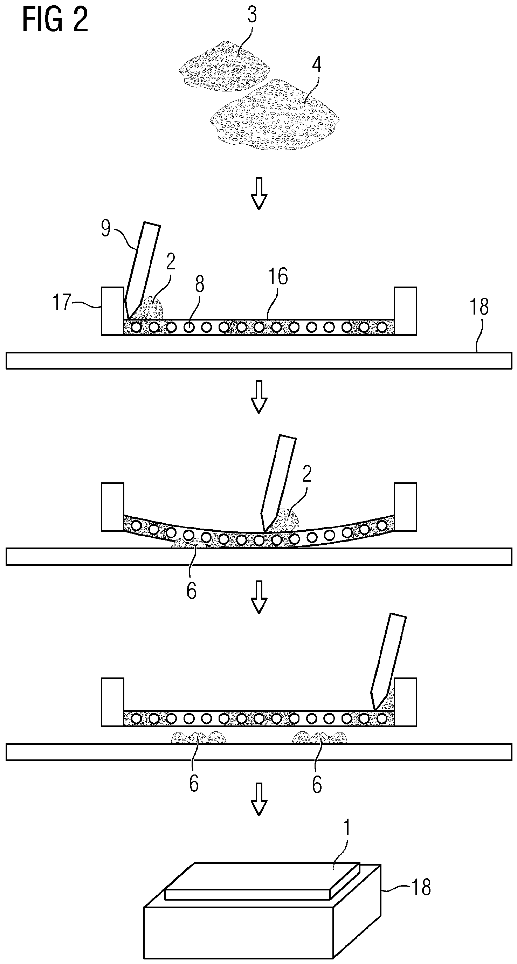

Die Figur 2 zeigt ein zweites Ausführungsbeispiel des vorgeschlagenen Verfahrens, wobei ein schematisches Ablaufdiagramm dargestellt ist.

Zunächst werden ein Binder 3 und ein Pulver 4 bereitgestellt, wobei das Pulver Partikel 5 einer Magnetlagerung für Permanentmagnete aufweist. Aus dem Binder 3 und dem Pulver 4 wird eine Masse 2 gewonnen, welche dann mittels Siebdruckes zu einem Grünling 6 ausgeformt wird. Dazu wird die Masse 2 auf ein Siebdruckgewebe 8 aufgebracht, welches eine passend ausgeformte Schablone 16 aufweist, um Grünling 6 auszuformen. Mittels einer Rakel 9, welche innerhalb des Rahmens 17 auf dem Siebdruckgewebe 8 bewegt wird, wird die Masse 2 durch jene Stellen des Siebdruckgewebes 8 hindurchgedrückt, an welchem das Siebdruckgewebe 8 nicht wegen der Schablone 16 undurchlässig ist. Die durch das Siebdruckgewebe 8 hindurchgedrückte Masse 2 wird auf eine Unterlage 18 gedrückt und bildet dabei den Grünling 6 aus. Anschließend wird der ausgeformte Grünling 6 gesintert, um den Permanentmagneten 1 zu erhalten. Insbesondere kann der gesinterte Grünling 6 bzw. Permanent-magnet 1 nach dem Sintern durch eine Beaufschlagung mit einem entsprechenden Magnetfeld magnetisiert werden.

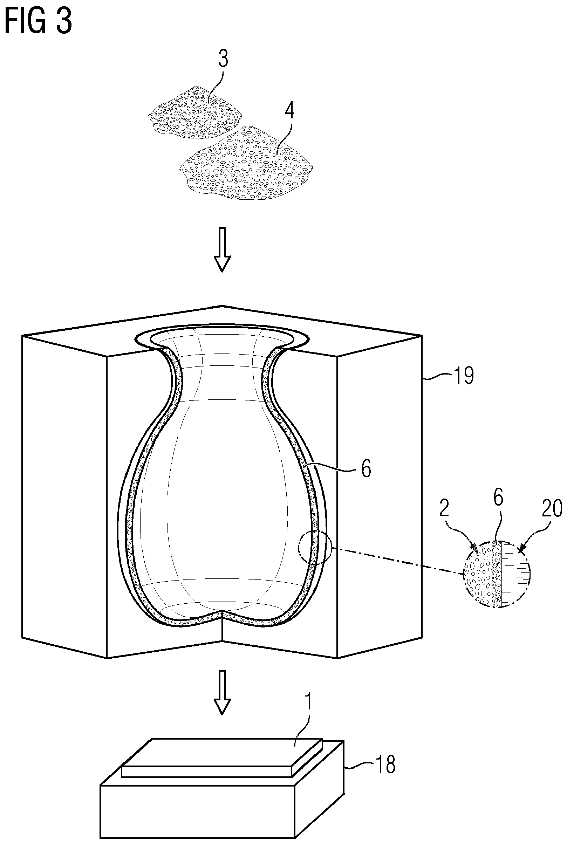

Die Figur 3 zeigt ein drittes Ausführungsbeispiel des vorgeschlagenen Verfahrens, wobei ein schematisches Ablaufdiagramm dargestellt ist.

Zunächst werden ein Binder 3 und ein Pulver 4 bereitgestellt, wobei das Pulver Partikel 5 einer Magnetlagerung für Permanentmagnete aufweist. Aus dem Binder 3 und dem Pulver 4 wird eine Masse 2 gewonnen, welche dann mittels Schlickergusses zu einem Grünling 6 ausgeformt wird. Dazu wird die Masse 2 auf bzw. in eine geeignete Form 19, bspw. eine Gipsform, auf- bzw. angebracht. Vorzugsweise wird die Masse mit einer Flüssigkeit, bspw. Wasser, verdünnt, um einen Schlicker zu erhalten. Die Masse 2 bzw. der Schlicker lagern sich an der Form 19 an, wo die Form 19 der Masse 2 bzw. dem Schlicker die Flüssigkeitsanteile 20 entziehen, wodurch sich die Masse 3 an der Form 19 in Form eines Grünlings 6 ablagert, verdichtet und zunehmend verfestigt. Nach Erreichung eines bestimmten plastischen Festigkeit-Zustands kann die Form 19 vorsichtig von dem Grünling 6 werden. Anschließend wird der ausgeformte Grünling 6 gesintert, um den Permanentmagneten 1 zu erhalten. Insbesondere kann der gesinterte Grünling 6 bzw. Permanent-magnet 1 nach dem Sintern durch eine Beaufschlagung mit einem entsprechenden Magnetfeld magnetisiert werden.

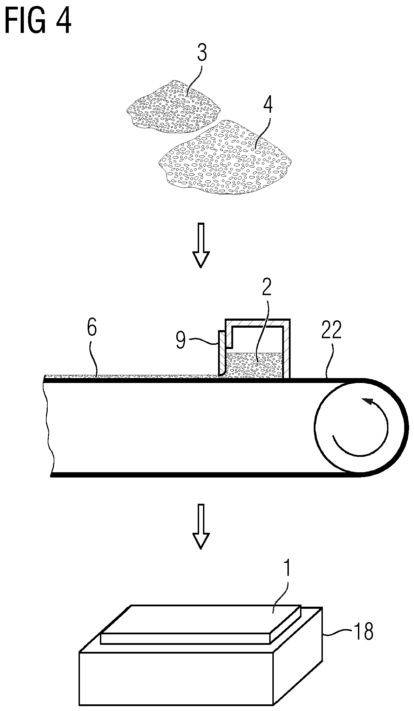

Die Figur 4 zeigt ein viertes Ausführungsbeispiel des vorgeschlagenen Verfahrens, wobei ein schematisches Ablaufdiagramm dargestellt ist.

Zunächst werden ein Binder 3 und ein Pulver 4 bereitgestellt, wobei das Pulver Partikel 5 einer Magnetlagerung für Permanentmagnete aufweist. Aus dem Binder 3 und dem Pulver 4 wird eine Masse 2 gewonnen, welche dann mittels Foliengießens zu einem Grünling 6 ausgeformt wird. Dazu wird die Masse 2 auf ein geeignetes Band 22 aufgebracht. Vorzugsweise wird die Masse 2 mit einer Flüssigkeit verdünnt, um einen Schlicker zu erhalten. Beim in der Figur 4 dargestellten Bandgießen fließt die Masse 2 bzw. der Schlicker aus einem Vorratsbehälter insb. drucklos und blasenfrei auf das Band 22, wobei ein Schlitz am Boden des Vorratsbehälters mittels einer Rakel 9 einstellbar ist. Alternativ kann die Masse 2 bzw. der Schlicker mittels Trommelgießens aus dem Vorratsbehälter unter eine Trommel fließen oder mit einer elektrisch einstellbaren Rakelklinge gleichmäßig auf das Band 22 aufgestrichen, wobei hierbei die Dicke der Masse 2 durch Lasermessung exakt kontrolliert werden kann. Somit wird die Masse 2 auf dem Band 22 zu einem Grünling 6 ausgeformt. Aus dem Grünling 6 kann bei der Folienbildung die Flüssigkeit verdunsten, bspw. ein Lösungsmittel bzw. Bestandteile des Binders 3. Der zunächst als Folie ausgeformte Grünling 6 kann mit offener Oberfläche durch eine Trockenzone laufen und anschließend mit einer Abstreifvorrichtung von der Trommel oder dem Umlaufband entfernt werden. Anschließend wird der ausgeformte Grünling 6 gesintert, um den Permanentmagneten 1 zu erhalten. Insbesondere kann der gesinterte Grünling 6 bzw. Permanent-magnet 1 nach dem Sintern durch eine Beaufschlagung mit einem entsprechenden Magnetfeld magnetisiert werden.

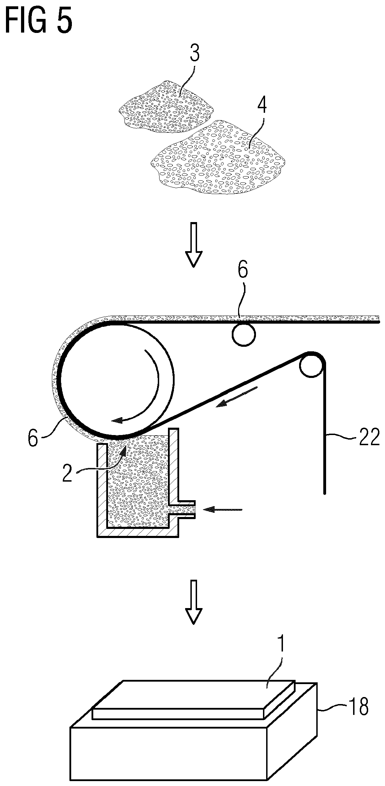

Die Figur 5 zeigt ein fünftes Ausführungsbeispiel des vorgeschlagenen Verfahrens, wobei ein schematisches Ablaufdiagramm dargestellt ist.

Zunächst werden ein Binder 3 und ein Pulver 4 bereitgestellt, wobei das Pulver Partikel 5 einer Magnetlagerung für Permanentmagnete aufweist. Aus dem Binder 3 und dem Pulver 4 wird eine Masse 2 gewonnen, welche dann mittels Folienziehens zu einem Grünling 6 ausgeformt wird. Dazu wird die Masse 2 auf ein geeignetes Band 22 aufgebracht. Vorzugsweise wird die Masse 2 mit einer Flüssigkeit verdünnt, um einen Schlicker zu erhalten. Die Masse 2 bzw. der Schlicker werden in einen Vorratsbehälter eingebracht, der nach oben offen ist. Ein geeignetes Band 22 wird durch die Öffnung des Vorratsbehälters über eine passende Walze umgelenkt, wobei das Band 22 dabei durch die in dem Vorratsbehälter befindliche Masse 2 bzw. den Schlicker gezogen werden. Somit wird die Masse 2 auf dem Band 22 zu einem Grünling 6 ausgeformt. Aus dem Grünling 6 kann bei der Folienbildung die Flüssigkeit verdunsten, bspw. ein Lösungsmittel bzw. Bestandteilen des Binders 3. Der zunächst als Folie ausgeformte Grünling 6 kann mit offener Oberfläche durch eine Trockenzone laufen und anschließend mit einer Abstreifvorrichtung von der Trommel oder dem Umlaufband entfernt werden. Anschließend wird der ausgeformte Grünling 6 gesintert, um den Permanentmagneten 1 zu erhalten. Insbesondere kann der gesinterte Grünling 6 bzw. Permanent-magnet 1 nach dem Sintern durch eine Beaufschlagung mit einem entsprechenden Magnetfeld magnetisiert werden.

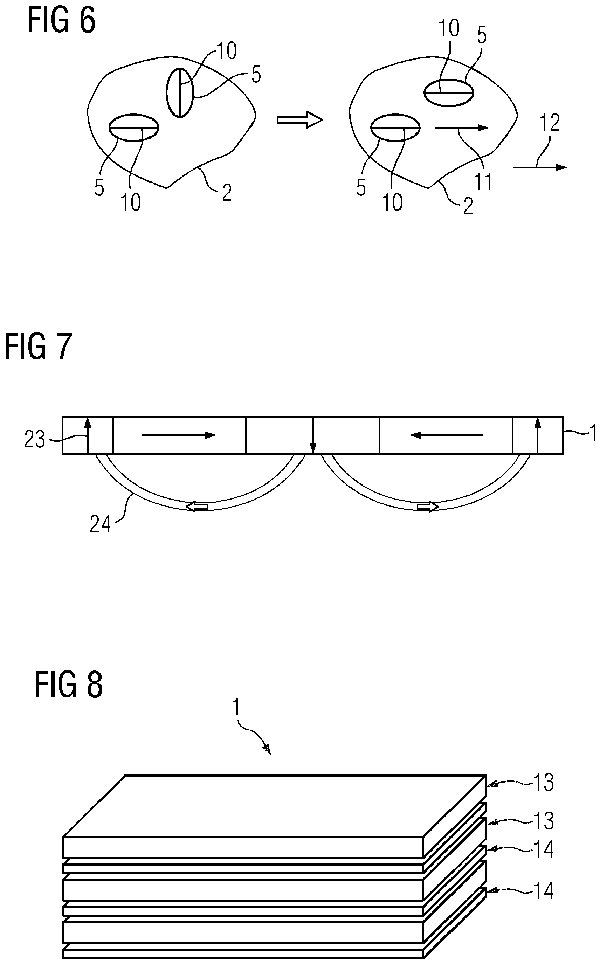

Die Figur 6 zeigt einen beispielhaften Verfahrensschritt zur Ausrichtung einer Vorzugsrichtung 10 der Partikel 5 entlang einer vorgebbaren Richtung 11.

Dargestellt ist dabei die Masse 2 mit den Partikeln 5. Die Partikel 5 weisen jeweils eine Vorzugsrichtung 10 auf, bspw. da sie nicht kugelförmig bzw. kugelsymmetrisch sind. Somit weisen die Partikel 5 eine magnetische Formanisotropie auf und weisen damit eine Längsrichtung auf, entlang welcher sie sich weiter erstrecken als senkrecht dazu. Alternativ oder zusätzlich können die Partikel 5 eine intrinsische magnetische Anisotropie aufweisen, sodass das jeweilige Partikel 5 eine leichte Richtung bzw. magnetische Vorzugsrichtung aufweist, entlang welcher das Partikel 5 besonders gut magnetisierbar ist.

Oftmals sind die Vorzugsrichtungen 10 der verschiedenen Partikel 5 zunächst statistisch verteilt, sodass insgesamt keine resultierende Gesamt-Vorzugsrichtung bezüglich der Partikel 5 vorliegt.

Wird die Masse 2 mit einem Magnetfeld 12 beaufschlagt, so können die Partikel 5 gedreht werden und in Richtung des Magnetfeldes 12 ausgerichtet werden. Somit wird auch die jeweilige Vorzugsrichtung 10 der Partikel 5 ausgerichtet. Vorzugsweise wird dabei das Magnetfeld 12 entlang einer vorgebbaren, gewünschten Richtung 11 angelegt, sodass sich die Partikel 5 und somit auch deren Vorzugsrichtung 10 entlang der vorgebbaren Richtung 11 ausrichten.

Die Ausrichtung der Partikel 5 erfolgt dabei vor dem Sintern, insbesondere bereits während des Ausformens, des Grünlings 6.

Die Figur 7 zeigt ein erstes Ausführungsbeispiel eines mittels des vorgeschlagenen Verfahrens hergestellten Permanentmagneten 1, wobei ein Querschnitt durch den Permanentmagneten 1 dargestellt ist.

Bei dem in der Figur 7 dargestellten Permanentmagneten 1 handelt es sich dabei um ein Halbach-Array, welches sich aus fünf Permanentmagnet-Segmenten zusammensetzt. Innerhalb des Permanentmagneten 1 deuten die Pfeile 23 die magnetische Orientierung eines jeden Segmentes an. Mit den Pfeilen 24 wird dabei der magnetische Fluss unterhalb des Permanentmagneten 1 angedeutet.

Bspw. beträgt die Schichtdicke 7 des hergestellten Permanentmagneten 1 höchstens 3 mm, insbesondere höchstens 1,5 mm bzw. 1 mm.

Die Figur 8 zeigt ein zweites Ausführungsbeispiel eines mittels des vorgeschlagenen Verfahrens hergestellten Permanentmagneten 1, wobei eine perspektivische Ansicht des Permanentmagneten 1 dargestellt ist. Gleiche Bezugszeichen wie in Figur 7 bezeichnen dabei gleiche Gegenstände.

Der Permanentmagnet 1 weist drei Lagen 13 auf, die bspw. gute magnetische Eigenschaften aufweisen. Zwischen den Lagen 13 bzw. ganz unten sind elektrisch isolierende Schichten 14 angeordnet, durch welche sich Wirbelströme und damit einhergehende Verluste verringern lassen.

Bspw. beträgt die Schichtdicke 7 der jeweiligen Lage 13 höchstens 3 mm, insbesondere höchstens 1,5 mm bzw. 1 mm.

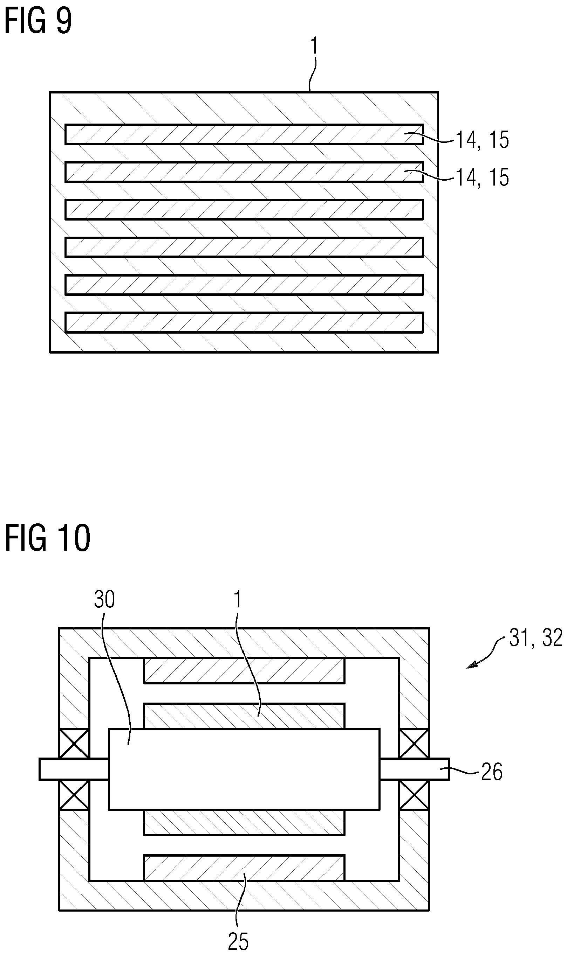

Die Figur 9 zeigt ein drittes Ausführungsbeispiel eines mittels des vorgeschlagenen Verfahrens hergestellten Permanentmagneten 1, wobei ein Querschnitt durch den Permanentmagneten 1 dargestellt ist.

In den Permanentmagneten 1 sind elektrisch isolierende Schichten 14 bzw. elektrisch isolierende Dotierungen 15 eingebracht, mittels welchen sich Wirbelströme und damit einhergehende Verluste verringern lassen.

Die Figur 10 zeigt Ausführungsbeispiel des vorgeschlagenen Läufers 30 und des vorgeschlagenen Geräts, welches als Elektromotor 31 oder als Elektrogenerator 32 ausgestaltet sein kann. Der Läufer 30 weist einen oder mehrere Permanentmagnete 1 auf, die bspw. an seiner Oberfläche angeordnet sind oder im Inneren des Läufers 30 vergraben sind. Der Elektromotor 31 bzw. der Elektrogenerator 32 weist weiterhin einen Stator 25 auf, wobei der Läufer 30 eine Welle 26 aufweist, die drehbar gelagert in dem Gerät angeordnet ist.

## Patentansprüche

1. Verfahren zur Herstellung eines Permanentmagneten (1) umfassend folgende Verfahrensschritte:
- Bereitstellen einer Masse (2) aufweisend einen Binder (3) und ein Pulver (4) aufweisend Partikel (5) einer Magnetlegierung für Permanentmagnete,
- Ausformen der bereitgestellten Masse (2) zu einem Grünling (6) mittels Siebdruckes, mittels Schlickergusses oder mittels Folienziehens bzw. -gießens und
- Sintern des ausgeformten Grünlings (6).

2. Verfahren nach Anspruch 1,
wobei die Schichtdicke (7) des hergestellten Permanentmagneten (1) höchstens 3 mm, insbesondere höchstens 1,5 mm bzw. 1 mm, beträgt.

3. Verfahren nach zumindest einem der vorhergehenden Ansprüche, weiterhin umfassend:
- Entfernen des Binders (3) bzw. von Bestandteilen des Binders (3) aus dem Grünling (6) derart, dass der im Grünling (6) enthaltene Kohlenstoff und/oder im Grünling (6) enthaltene Wasserstoffe auf ein für den Permanentmagneten (1) unschädliches Niveau gesenkt wird bzw. werden.

4. Verfahren nach zumindest einem der vorhergehenden Ansprüche,
wobei durch den Binder (3) ein Kohlenstoff-Eintrag in den entbinderten Grünling (6) von höchstens 150 ppm, insbesondere höchstens 100 ppm, bewirkt wird.

5. Verfahren nach zumindest einem der vorhergehenden Ansprüche,
wobei der Binder (3) einen Duroplast aufweist und/oder wobei die Partikel (5) der Magnetlegierung kunststoffgebundene Partikel (5) umfassen.

6. Verfahren nach zumindest einem der vorhergehenden Ansprüche,
wobei die Masse (2) bei dem Siebdruck eine derartige Strukturviskosität aufweist, dass die Viskosität der Masse (2) beim Hindurchdrücken durch das Siebdruckgewebe (8) abnimmt und die Viskosität der Masse (2) nach dem beim Hindurchdrücken durch das Siebdruckgewebe (8) wieder zunimmt.

7. Verfahren nach zumindest einem der vorhergehenden Ansprüche,
wobei vor dem Sintern des Grünlings (6) die Vorzugsrichtung (10) der Partikel (5) entlang einer vorgebbaren Richtung (11) ausgerichtet wird.

8. Verfahren nach Anspruch 7,
wobei die Partikel (5) mit einem Magnetfeld (12) derart beaufschlagt werden, dass sich die Partikel (5) drehen und sich damit die Vorzugsrichtung (10) der Partikel (5) entlang der vorgebbaren Richtung (11) ausrichtet.

9. Verfahren nach Anspruch 7 oder 8,
wobei die Masse (2) während des Ausformens des Grünlings (6) derart mechanisch texturiert wird, dass sich die Vorzugsrichtung (10) der Partikel (5) entlang der vorgebbaren Richtung (11) ausrichtet.

10. Verfahren nach zumindest einem der vorhergehenden Ansprüche,
wobei der Grünling (6) zumindest zwei mittels Siebdruckes, mittels Schlickergusses oder mittels Folienziehens bzw. - gießens ausgeformte Lagen (13) aufweist.

11. Verfahren nach Anspruch 10,
wobei zumindest zwei der ausgeformten Lagen (13) voneinander abweichende Material- bzw. Magneteigenschaften aufweisen.

12. Verfahren nach zumindest einem der vorhergehenden Ansprüche, weiterhin umfassend:
- Einbringen zumindest einer elektrisch isolierenden Schicht (14) bzw. einer elektrisch isolierenden Dotierung (15) in den Grünling (6).

13. Verfahren nach zumindest einem der vorhergehenden Ansprüche,
wobei der Permanentmagnet (1) als freistehende Struktur bzw. nicht substratbehaftet hergestellt wird.

14. Läufer (30) für einen Elektromotor (31) oder einen Elektrogenerator (32) aufweisend zumindest einen Permanentmagneten (1), welcher mit einem Verfahren nach einen der vorhergehenden Ansprüche hergestellt ist.

15. Gerät, insbesondere Elektromotor (31) oder Elektrogenerator (32), aufweisend zumindest einen Permanentmagneten (1), welcher mit einem Verfahren nach einen der Ansprüche 1 bis 13 hergestellt ist, bzw. aufweisend einen Läufer (30) nach Anspruch 14.
